(19) **Europäisches Patentamt**
**European Patent Office**
**Office européen des brevets**

(11) Publication number : **0 380 483 B1**

(12) # EUROPEAN PATENT SPECIFICATION

(45) Date of publication of patent specification :
**30.12.92 Bulletin 92/53**

(51) Int. Cl.⁵ : **F24D 19/02**

(21) Application number : **88905008.4**

(22) Date of filing : **25.04.88**

(86) International application number :
**PCT/SE88/00208**

(87) International publication number :
**WO 89/02053 09.03.89 Gazette 89/06**

(54) **HEATING OR COOLING ARRANGEMENT.**

(30) Priority : **31.08.87 SE 8703350**

(43) Date of publication of application :
**08.08.90 Bulletin 90/32**

(45) Publication of the grant of the patent :
**30.12.92 Bulletin 92/53**

(84) Designated Contracting States :
**AT BE CH DE FR GB IT LI LU NL SE**

(56) References cited :
**EP-A- 0 201 473**
**EP-A- 0 219 887**
**NO-C- 86 045**
**GEMA UNDETAKE, broschyr 3091b, 1959**

(73) Proprietor : **NOVENCO AB**
**Box 4134**
**S-422 04 Hisings Backa (SE)**

(72) Inventor : **CHRISTENSEN, Elo, Freud**
**Flöjtvägen 2**
**S-435 00 Mölnlycke (SE)**

(74) Representative : **Mossmark, Anders et al**
**Albihn West AB Box 142**
**S-401 22 Göteborg (SE)**

Jouve, 18, rue Saint-Denis, 75001 PARIS

## Description

Technical field:

The present invention relates to a heating or cooling arrangement to be fitted in a plane in a room between its upper and lower limiting area.

Prior art:

In order to obtain a uniform and comfortable temperature in a room, which temperature can differ from the natural outside temperature very substantially depending on the time of year and the activity being carried out in the room, various types of heating and cooling installations are known, and also pure ventilation installations. The last-mentioned type - ventilation installations - create, assuming an absence of heating or cooling elements, only a circulation of the air present in the room and do not normally provide any change in temperature other than possibly a levelling out of the temperature in the upper and lower areas of the room.

In order to create a change in the temperature in the room, it is known to heat panels by means of hot water or by electric means. It is also known to lower the room temperature by cooling panels, which absorb heat from the surroundings. Moreover, it is already known to allow air to flow in through elements which, depending on the desired temperature in the room, are warmer or colder than the air present in the room.

In line with the increasing use of electronics in office environments, a largely unintentional heat transfer has been created. In this connection there is an increased requirement for cooling installations in these environments which more often than not have a false ceiling in the upper area of the room. Many of these false ceilings are of the open false ceiling type and have a grid ceiling which is supported by a support framework and through which one can easily see up into the upper area towards the existing ceiling. On top of these so-called grid ceilings there may advantageously be arranged cooling installations or combined heating and cooling installations, in the latter case the installation for emission of heat functioning as a radiation unit and for the emission of cool air as a convection unit.

However, it is extremely common for the false ceilings to consist of prefabricated modules which are supported by a visible support framework, preferably of the T-section type. It is also common to suspend finished false ceiling modules in a visible support framework which functions as a cable ducting false ceiling, in which connection the modules serve for lighting or sound absorption. In this connection it has been found that there is a very considerable requirement to be able to remove one or more modules and replace them with a cooling installation or heating and cooling installation which has the same or essentially the same format as the module removed and which, in an aesthetic manner, goes well with the other parts of the false ceiling.

A heating or cooling arrangement which can be hung from a ceiling is known from EP-A-0 201 473. In this known arrangement, heating or cooling by convection is achieved by the provision of a housing having an upper opening and lower openings. A finned element with a conduit extending therethrough is provided within the housing adjacent the upper opening. The lower openings are arranged to discharge the treated air in a substantially horizontal direction essentially parallel to the lower end wall of the arrangement.

A heating arrangement which can be incorporated in a false ceiling is disclosed in the GEMA UNDERTAK broschyr 3091b, 1959. This known arrangement includes at least one elongated conduit arranged above a perforated sheet-like element which forms an essentially plane surface together with the surface of the remainder of the ceiling.

Technical problem:

If a heating or cooling installation or a combined heating and cooling installation of a conventional type is arranged on top of such a false ceiling of the type just mentioned, the cool air or heat emitted is interrupted or eliminated by the panels of the false ceiling, in which connection an over-dimensioning is required or the desired function completely or partly fails to occur. Furthermore, such an installation involves a not inconsiderable working moment and requires a large space.

Solution:

The problem of obtaining an unimpeded route for heat or cool air from a heating or cooling arrangement arranged in a ceiling is solved according to the invention by the arrangement according to claim 1.

Advantages:

The invention provides a heating or cooling arrangement by means of which emitted cool air or heat can be passed unimpeded out into the room, and which has a predetermined outer format and is designed to be used as a replacement module on false ceilings.

Description of figures:

The invention will be described in greater detail below on the oasis of an exemplary embodiment and with reference to the attached drawings in which fig.

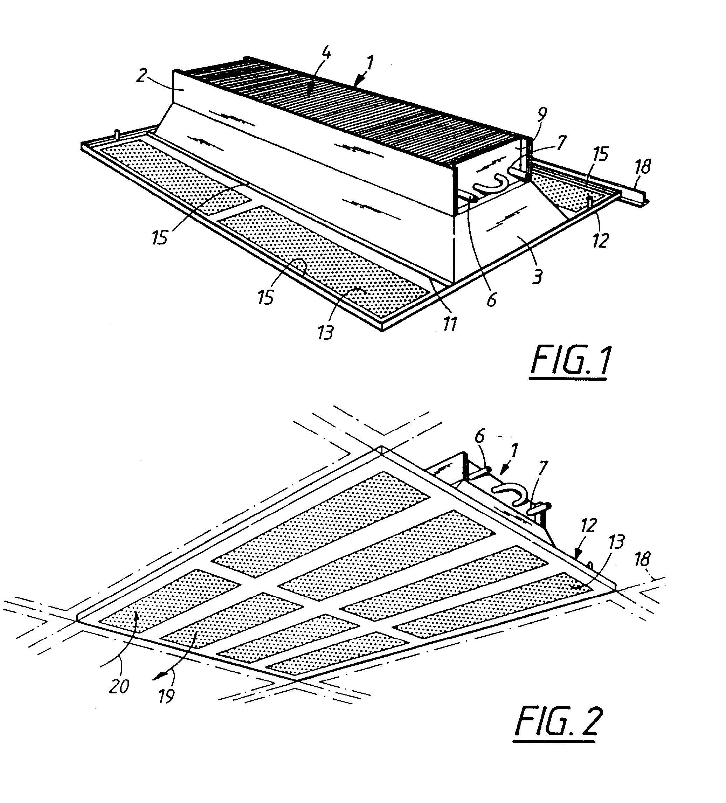

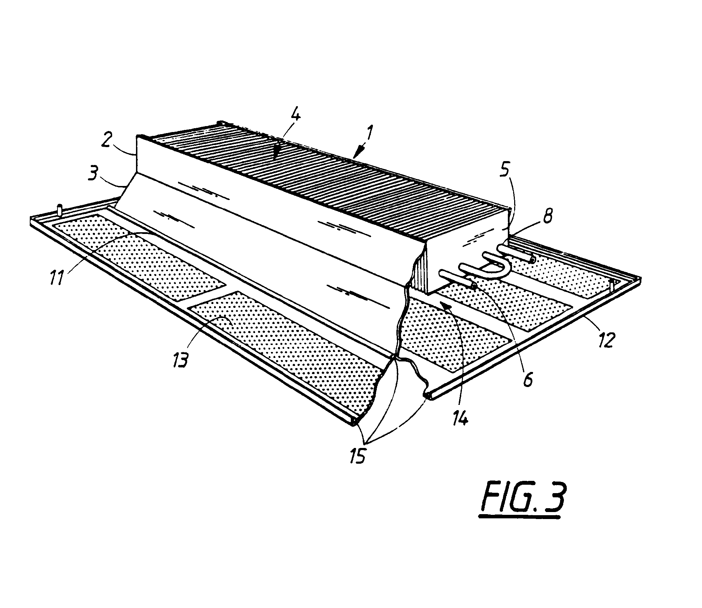

1 shows the arrangement in a perspective view, Fig. 2 shows the arrangement arranged on a false ceiling seen from below, and Fig. 3 shows a partly broken section of the arrangement in Fig. 1.

Preferred embodiment:

The invention will be described below on the basis of an exemplary embodiment which does not, however, constitute a limitation to the scope of application of the invention. As shown in Fig. 1 the arrangement comprises a convection housing 1 which in turn comprises an upper, box-shaped part 2 and a lower part 3 whose sides are set at an angle relative to the sides of the upper part 2, in which connection the sectional area of the lower part 3 increases with the distance from the upper part 2, so that the lower part essentially has the shape of a truncated cone. Another configuration of the lower part 3 is of course possible. Thus, for example, the lower part can entirely follow the side walls of the upper part and form extensions of these or have a box shape with walls which project at right angles from the lower edge section of the upper part and turn down at a distance from this in order to connect with the top side of the radiation element 12. The upper part 2 surrounds a lamina tube heat exchanger 4 comprising a number of sheet-like laminas 5 arranged alongside each other and parallel to each other, preferably made of aluminium, although another alloy or metal is also conceivable. The sheet-like laminas 5 may be, but not necessarily, in contact with the wall sections of the upper part 2, which sections surround the lamina tube heat exchanger 4. The sheet-like laminas are connected to each other by means of at least one tube 6 extending through the upper part 2 preferably in a serpentine pattern, which tube runs through holes 7, 8 in at least one of the end walls 9 of the upper part and through the sheet-like laminas 5. The tubes 6 are preferably in metallic contact with the laminas by means of the former having been expanded in the holes 8.

The outer edge line 11 of the lower part 3 bears against an up-per surface of a sheet-like, rectangular radiation element 12, preferably made of aluminium or sheet steel, and which has a number of openings 13 which have a circular or square shape or are in the form of a slot pattern in panels. A covering material through which air ran readily flow, such as a screen, may be arranged in the openings 13.

The convertion housing 1 is positioned in such a way that it preferably assumes a central position on the radiation element 12, in which connection the lower part of the convertion housing rovers a certain predetermined part or number of the openings 13 of the radiation element 12, there being formed, by means of the lower part between the lower side of the lamina tube heat exchanger 4 and the upper side of the radiation element 12, a convertion channel 14 whose height is dependent on the predetermined effect of the cooling arrangement and the flow area of the openings 13 of the radiation element.

As shown in Figs. 1 and 3 an elongate tube 15 runs along the outer edge lines of the radiation element and along the lower part of the convertion housing in contact with the radiation element, which tube is designed as a carrier of a heating medium. The tube 15 is brought into contact with the top side of the radiation element 12 by means of clips or another type of fixing element. It is also conceivable for the outer edge sections of the radiation element to be bent over the tube 15 in such a way that the latter comes into heat-conducting contact with the radiation element.

As shown in Figs. 1 and 2 the arrangement according to the invention is designed to be arranged as a module in a support framework which is visible from underneath and is made up, for example, of a T-section 18, the radiation element being expediently arranged in the T-section as shown in Fig. 1.

It is also conceivable for the arrangement according to the invention to be arranged in false ceilings which have a support framework of cable ductings essentially having the form of a U-section, the radiation element having hooks extending out from the edge sections of the element and not shown in the drawings, in which connection the arrangement according to the invention is hooked firmly on the edge sections of the cable ductings.

When using the arrangement according to the present invention for heat, absorption, cooling water is allowed to flow from a central cooling system, at a temperature of preferably 6-10°C below the room temperature, through the tube 6, in which connection the sheet-like laminas 5 of the lamina tube heat exchanger 4 are cooled by means of the tube being in contact with the laminas. In this way the air flowing through the lamina tube heat exchanger is cooled, the density of the air increasing. When the density of the cold air increases, the air which is present in the lamina tube heat exchanger descends through the convection channel 14 and out in the direction of the arrow 19 through the holes 13 in the radiation element 12. Intake air to the convection housing flows up in the direction of the arrow 20 through the openings 13 of the radiation element 12 which are located outside and alongside the lower part of of the convection housing. In this connection the flow of intake air passes along the sides of the convection housing and is brought into the lamina tube heat exchanger for cooling, a new cooling cycle thus beginning. Air for cooling is of course also taken from air which is supplied to the convection housing by means other than through the openings 13, such as through existing openings in the false ceiling.

When the arrangement according to the present invention is used for heat emission, the supply of cooling water from the central cooling system to the tubes 6 is throttled, and hot water is supplied to the tubes 15 from a central hot-water system. Since the tubes 15 are in heat-conducting contact with the radiation element 12 and the latter is of a heat-conducting material, the heat is passed through the tube wall to the radiation element which is heated and emits heat to the room by means of radiation.

The invention is not limited to the exemplary embodiment described here and shown in the drawings, but can be varied within the scope of the subsequent patent claims. Thus, for example, the radiation element can be made narrower, in which connection its openings which lie in the radiation element beyond the bearing of the convection housing against the radiation element are eliminated. By this means the invention is specially adapted to false ceilings having a support framework of cable ductings, in which connection intake air can be taken up without limitations through existing openings in the false ceiling. The radiation element can also be made of a material with poor heat conduction, such as wood or plastic material, the tubes for carrying the heating medium expediently being excluded.

## Claims

1. Heating or cooling arrangement to be fitted in a plane in a room between its upper and lower limiting area and comprising a housing (1) having an upper opening and a lower opening, the lower opening being defined by an outer limit line (11) of the housing (1) and being connected to at least one of a number of openings (13) in a sheet-like element (12) arranged in said plane so that the lower opening is directed towards the lower limiting area of the room, said housing (1) incorporating a finned element (4) arranged at a distance from said plane with at least one elongated conduit (6) extending therethrough, the arrangement further comprising at least one elongated conduit (15) arranged in heat conducting contact with the sheet-like element (12), wherein said housing (1) is arranged on said sheet-like element (12) such that regions of said element extend beyond the outer limit line (11) of the housing on at least two sides thereof.

2. Arrangement according to claim 1, wherein the housing (1) preferably has an elongate form and is completely open at its top and bottom, in which connection the sectional area of the housing (1) increases in a direction towards its lower opening with distance from the finned element (4) which, in turn, is arranged at the upper opening of the housing in such a way that edge sections of the housing surround the sides of the finned element, with an air channel being formed between the lower side of the finned element (4) and the sheet-like element (12).

3. Arrangement according to claim 2, wherein the sheet-like element has, on its extension beyond the outer limit line (11) of the housing, at least one opening (13) arranged on at least two opposite sides of the element, in that the openings have a round, square or rectangular shape, and wherein the sheet-like element is incorporated as a part of a false ceiling, preferably arranged on a support framework, in which connection the sheet-like element forms the false ceiling together with other elements arranged on the support framework.

4. Arrangement according to claim 3, wherein the openings (13) have a covering through which air can readily flow.

## Patentansprüche

1. Heiz- und Kühlanordnung, die in einer Ebene in einem Raum zwischen ihrem oberen und unteren Begrenzungsbereich eingepaßt wird und ein Gehäuse (1) umfaßt, das eine obere Öffnung und eine untere Öffnung aufweist, wobei die untere Öffnung durch eine äußere Begrenzungslinie (11) des Gehäuses (1) definiert wird und mit mindestens einer (Öffnung) von einer Anzahl von Öffnungen (13) in einem plattenartigen Element (12) verbunden ist, welches in der Ebene angeordnet ist, so daß die untere Öffnung zum unteren Begrenzungsbereich des Raumes hin gerichtet ist, bei der im Gehäuse (1) ein geripptes Element (4) eingefügt ist, das in einem Abstand von der Ebene mit mindestens einer langgestreckten Leitung (6), welche sich durch es hindurch erstreckt, angeordnet ist, bei der die Anordnung weiterhin mindestens eine langgestreckte Leitung (15) umfaßt, die in wärmeleitenden Kontakt an dem plattenartigen Element (12) angeordnet ist, worin das Gehäuse (1) auf dem plattenartigen Element (12) derart angeordnet ist, daß sich Bereiche des Elementes an mindestens zwei Seiten über die äußere Begrenzungslinie (11) des Gehäuses hinaus erstrecken.

2. Anordnung nach Anspruch, worin das Gehäuse (1) vorzugsweise eine langgestreckte Form aufweist und an seinem Kopf und Boden vollständig offen ist, wobei in dem Zusammenhang der Querschnitt des Gehäuses (1) in Richtung zu seiner unteren Öffnung hin mit Abstand vom gerippten Element (4) anwächst, welches, in Drehung, an der oberen Öffnung des Gehäuses derart angeordnet ist, daß Eckabschnitte des Gehäuses die Seiten des gerippten Elementes umgeben, damit ein Luftkanal zwischen der unteren Seite des gerippten Elementes (4) und dem plattenartigen Element (12) gebildet wird.

3. Anordnung nach Anspruch 2, worin das plattenartige Element auf seiner Ausdehung für die äußere Begrenzungslinie (11) des Gehäuses hinaus mindestens eine Öffnung (13), welche an mindestens zwei gegenüberliegenden Seiten des Elementes angeordnet ist, aufweist, in welcher die Öffnungen eine runde, quadratische oder rechteckige Form haben und in welcher das plattenartige Element als Teil einer Doppel-Decke eingebaut ist und vorzugsweise auf einem Abstützungs-Versteifungsrahmen angeordnet ist, wobei in dem Zusammenhang das plattenartige Element zusammen mit anderen Elementen, die auf dem Abstützungs-Versteifungsrahmen angeordnet sind, die Doppel-Decke bildet.

4. Anordnung nach Anspruch 3, worin die Öffnungen (13) eine Abdeckung aufweisen, durch welche leicht Luft strömen kann.

**Revendications**

1. Ensemble de chauffage ou de refroidissement destiné à être monté dans un plan dans une pièce entre les surfaces formant les limites supérieure et inférieure de celle-ci, et comprenant un boîtier (1) ayant une ouverture supérieure et une ouverture inférieure, l'ouverture inférieure étant délimitée par une ligne limite inférieure (11) du boîtier (1) et étant raccordée à au moins l'une d'un certain nombre d'ouvertures (13) formées dans un élément (12) en forme de feuille disposé dans ledit plan afin que l'ouverture inférieure soit dirigée vers la surface limite inférieure de la pièce, le boîtier (1) comportant un élément (4) à ailettes, placé à une certaine distance dudit plan avec au moins un conduit allongé (6) qui le traverse, la disposition comportant en outre au moins un conduit allongé (15) placé en contact thermique avec l'élément (12) en forme de feuille, si bien que le boîtier (1) est disposé sur l'élément (12) en forme de feuille d'une façon telle que des régions de l'élément dépassent de la ligne limite inférieure (11) du boîtier sur deux côtés au moins.

2. Ensemble selon la revendication 1, dans lequel le boîtier (1) a de préférence une forme allongée et est totalement ouvert à sa partie supérieure et à sa partie inférieure, et, dans le raccord, la section du boîtier (1) augmente vers son ouverture inférieure à distance de l'élément (4) à ailettes qui est lui-même placé à l'ouverture supérieure du boîtier de manière que les tronçons de bord du boîtier entourent les côtés de l'élément à ailettes, un canal d'air étant formé entre la face inférieure de l'élément (4) à ailettes et l'élément (12) analogue à une feuille.

3. Ensemble selon la revendication 2, dans lequel l'élément analogue à une feuille possède, à son prolongement au-delà de la ligne de limite externe (11) du boîtier, une ouverture au moins (13) placée sur au moins deux côtés opposés de l'élément, l'ouverture ayant une forme circulaire, carrée ou rectangulaire, et l'élément analogue à une feuille est incorporé à un faux-plafond, de préférence placé au-dessus d'un bâti de support, et l'élément en forme de feuille constitue le faux-plafond avec d'autres éléments placés sur le bâti de support.

4. Ensemble selon la revendication 3, dans lequel les ouvertures (13) ont un revêtement par lequel l'air peut facilement circuler.

_FIG.1_

_FIG.2_

FIG.3